# FASCICULE DE BREVET EUROPEEN

(11) **EP 4 334 743 B1**
(45) Date de publication et mention de la délivrance du brevet: **28.10.2026**
(21) Numéro de dépôt: 22735527.8
(22) Date de dépôt: 26.04.2022
(51) Int. Cl.: G01S 7/4912, G01S 17/18, G01S 17/58, G01S 17/95, G01S 7/484, G01S 7/486, G01S 17/10, G01S 17/26

(54) **SYSTEME LIDAR A IMPULSIONS**
GEPULSTES LIDAR-SYSTEM
PULSED LIDAR SYSTEM

(30) Priorité: 06.05.2021 FR 2104770
(43) Date de publication de la demande: 13.03.2024
(73) Titulaire: Office National d'Etudes et de Recherches Aérospatiales, 91120 Palaiseau (FR)
(72) Inventeur: LOMBARD, Laurent, 91120 PALAISEAU (FR)
(74) Mandataire: IPAZ
(86) Numéro de dépôt international: PCT/FR2022/050782
(87) Numéro de publication internationale: WO 2022/234212

(56) Documents cités:
- EP-A1- 3 605 140
- EP-A1- 3 783 391
- JP-A- 2010 127 840

## Description

### Domaine technique

La présente description concerne un système LIDAR à impulsions, en particulier un tel système LIDAR qui est adapté pour effectuer des mesures de vitesse anémométrique. Bien que LIDAR soit l'acronyme de «Light Detection And Ranging» en anglais, pour détection et mesure de distance avec de la lumière, les systèmes LIDAR sont très appropriés pour effectuer des mesures de vitesse à distance.

### Technique antérieure

Connaître la vitesse du vent à distance est utile dans de nombreux domaines, notamment la sécurité aérienne, par exemple pour détecter la présence de turbulences à proximité des pistes d'un aéroport, ou pour détecter des rafales de vent à bord d'un avion en vol afin de compenser des effets d'usure prématurée qui sont provoqués par les rafales sur les structures de l'avion. D'autres domaines où une telle connaissance est aussi utile sont le sondage et la gestion de sites éoliens, ou la mesure des courants atmosphériques depuis l'espace pour des prévisions météorologiques.

De façon connue, un système LIDAR à impulsions permet de mesurer la composante de vitesse d'une cible qui est parallèle à la direction d'émission du système LIDAR, ainsi que la distance d'éloignement de la cible par rapport au système LIDAR. Notamment, un système LIDAR à impulsions qui est conçu pour des mesures anémométriques permet d'obtenir des estimations de la composante de vitesse du vent qui est parallèle à la direction d'émission du système LIDAR, en fonction de la distance d'éloignement mesurée selon cette direction d'émission. Or pour de telles mesures anémométriques, les signaux qui sont détectés par le système LIDAR et à partir desquels sont obtenus les résultats de mesure pour la vitesse du vent, sont produits par une rétrodiffusion des impulsions émises qui est provoquée par des particules présentes en suspension dans l'air. Ces signaux de détection ont des intensités très faibles, de sorte qu'il est important d'améliorer le rapport signal-sur-bruit qui leur est associé.

De façon aussi connue, lorsque le système LIDAR à impulsions utilise une détection hétérodyne, c'est-à-dire lorsque le système est cohérent entre émission et détection, son rapport signal-sur-bruit est proportionnel à E·PRF^{1/2}, où E est l'énergie de chaque impulsion rétrodiffusée puis détectée, et PRF est la fréquence de répétition des impulsions, ou «Pulse Repetition Frequency» en anglais. Des efforts sont donc effectués pour augmenter les valeurs de l'énergie E et de la fréquence PRF.

Augmenter l'énergie E pourrait être réalisé en augmentant l'énergie de chaque impulsion telle qu'elle est émise par le système LIDAR. En effet, le rayonnement est produit initialement par une source laser, qui n'induit pas par elle-même une limitation pour la puissance du rayonnement qui est émis vers l'extérieur. Or la réalisation du système LIDAR en utilisant une technologie de connexions par fibres optiques présente des avantages considérables, notamment une robustesse du système qui est accrue et la suppression de mécanismes d'alignement des composants optiques du système les uns par rapport aux autres. Mais le phénomène connu de diffusion Brillouin stimulée, ou SBS pour «Stimulated Brillouin Scattering», qui se produit dans les fibres optiques limite la valeur de puissance-crête que peut avoir chaque impulsion émise.

Par ailleurs, la fréquence PRF est limitée par la portée du système LIDAR. En effet, il est nécessaire qu'une impulsion de rayonnement qui a été émise en direction de la cible soit détectée en retour avant d'émettre l'impulsion suivante, afin de corréler chaque partie de rayonnement détectée avec l'instant correct d'émission d'impulsion, pour en déduire la valeur de distance d'éloignement de la cible. Autrement dit, la fréquence PRF est limitée par la portée L qui est prescrite pour le système LIDAR selon la formule : PRF < C/(2·L), où C est la vitesse de la lumière.

Ainsi, ces limitations sur l'énergie des impulsions émises et la fréquence de répétition des impulsions, à cause des conséquences qui en résultent pour le rapport signal-sur-bruit des signaux de détection hétérodyne, empêchent d'améliorer la précision des résultats de mesure, notamment des résultats de mesures de vitesse anémométrique.

### Problème technique

A partir de cette situation, un but de la présente invention est de proposer un nouveau système LIDAR à impulsions, pour lequel le rapport signal-sur-bruit des signaux de détection est amélioré.

Un but complémentaire de l'invention est qu'un tel système LIDAR soit compatible avec l'utilisation de fibres optiques pour connecter entre eux les composants optiques à l'intérieur du système LIDAR.

Un autre but complémentaire de l'invention est qu'un tel système LIDAR soit adapté pour des mesures de vitesse anémométrique.

### Résumé de l'invention

Pour atteindre l'un au moins de ces buts ou un autre, un aspect de l'invention propose un système LIDAR à impulsions, qui est adapté pour déterminer une valeur d'un décalage fréquentiel d'effet Doppler subi par une série d'impulsions de rayonnement émises successivement par le système en direction d'une cible, entre des parties des impulsions telles que reçues après rétro-réflexion ou rétrodiffusion sur la cible et les mêmes impulsions telles qu'émises par le système. Le système fournit ensuite, à partir de la valeur déterminée pour le décalage fréquentiel, une estimation d'une composante de vitesse de la cible qui est parallèle à une direction d'émission optique du système. Pour cela, le système comprend :
- une voie d'émission, conçue pour produire la série d'impulsions,
- une voie de détection, conçue pour détecter les parties des impulsions reçues après rétro-réflexion ou rétrodiffusion sur la cible, et pour produire des signaux de détection hétérodyne qui correspondent aux impulsions de la série, et
- un module d'analyse spectrale, adapté pour effectuer une analyse spectrale des signaux de détection hétérodyne, de sorte que la valeur du décalage fréquentiel résulte de contributions de détection hétérodyne qui correspondent aux impulsions de la série. L'utilisation de plusieurs impulsions pour effectuer l'analyse spectrale procure une première amélioration du rapport signal-sur-bruit, et la précision des résultats de mesure qui sont fournis par le système LIDAR est améliorée en conséquence.

Selon l'invention, le système LIDAR possède les caractéristiques supplémentaires suivantes :
- la voie d'émission est conçue en outre pour que deux impulsions qui sont émises successivement en direction de la cible, soient disjointes spectralement et associées à des valeurs respectives de longueur d'onde centrale qui sont différentes, et
- le système est adapté pour que la valeur du décalage fréquentiel qui est déterminée par le module d'analyse spectrale résulte d'une combinaison de plusieurs contributions de détection hétérodyne qui correspondent respectivement aux impulsions disjointes spectralement et dont les valeurs de longueur d'onde centrale sont différentes.

Dans le cadre de l'invention, on entend par impulsions qui sont disjointes spectralement des impulsions dont les spectres respectifs ne se recouvrent pas, c'est-à-dire qu'il n'existe pas d'intervalle de longueur d'onde où les intensités spectrales respectives de plusieurs des impulsions soient supérieures à 1% d'une valeur maximale d'intensité spectrale de chacune des impulsions.

Ainsi, deux impulsions qui sont émises successivement par le système LIDAR de l'invention sont distinguées par des intervalles spectraux respectifs qui sont différents. La même distinction existe alors entre les parties d'impulsions reçues après rétro-réflexion ou rétrodiffusion sur la cible, si bien que le système est capable d'affecter chaque partie d'impulsion reçue après rétro-réflexion ou rétrodiffusion à l'impulsion émise qui lui correspond, indépendamment du fait qu'une autre impulsion soit émise entre temps. Ainsi, grâce à la différenciation spectrale qui est introduite par l'invention entre des impulsions successives, la fréquence PRF de répétition des impulsions peut être augmentée sans que soit diminuée la portée L du système LIDAR.

Par ailleurs, chaque impulsion peut encore avoir une valeur de puissance-crête qui est juste inférieure à un seuil convenu de diffusion Brillouin stimulée. Alors, vis-à-vis de la détermination de la valeur du décalage fréquentiel, combiner les contributions de détection hétérodyne qui correspondent respectivement à des impulsions disjointes spectralement et dont les valeurs de longueur d'onde centrale sont différentes est équivalent à une augmentation de la fréquence de répétition PRF. Une amélioration supplémentaire en résulte pour le rapport signal-sur-bruit relatif au signal de détection hétérodyne, qui est proportionnelle à la racine carrée de l'augmentation de la fréquence de répétition PRF que procure le fonctionnement du système LIDAR de l'invention. La précision sur la valeur qui est obtenue pour le décalage fréquentiel d'effet Doppler est augmentée en conséquence. Selon un autre point de vue, pour une valeur de la portée L qui est constante, et en conservant une précision identique des résultats de mesure, le système LIDAR de l'invention peut permettre de réduire le temps d'accumulation du signal de détection hétérodyne d'un facteur qui est égal au nombre des valeurs différentes de longueur d'onde centrale des impulsions.

Le fait que la valeur de puissance-crête de chaque impulsion reste inférieure au seuil de diffusion Brillouin stimulée permet d'utiliser une technologie de fibres optiques pour réaliser sa voie d'émission.

En outre, toutes les contributions de détection hétérodyne qui correspondent respectivement aux impulsions disjointes spectralement et dont les valeurs de longueur d'onde centrale sont différentes, peuvent participer à l'obtention de la valeur du décalage fréquentiel qui est attribué à l'effet Doppler produit par le mouvement de la cible. Ainsi, le système de l'invention peut posséder un fonctionnement dans lequel la fréquence de répétition PRF qui est effective est multipliée par le nombre des valeurs différentes de longueur d'onde centrale des impulsions, tout en conservant une valeur qui est inchangée pour la portée L du système LIDAR.

Ainsi, l'invention procure un système LIDAR qui détermine la valeur du décalage fréquentiel d'effet Doppler à partir de plusieurs contributions spectrales présentes dans le signal de détection hétérodyne. Ces contributions spectrales, qui constituent autant de composantes séparées spectralement dans le signal de détection hétérodyne, correspondent une-à-une aux valeurs de longueur d'onde centrale des impulsions émises en direction de la cible, qui sont différentes entre deux impulsions successives. Par exemple, une valeur élémentaire peut être déterminée pour le décalage fréquentiel d'effet Doppler à partir de chaque contribution spectrale de détection hétérodyne, indépendamment des autres contributions spectrales de détection hétérodyne, puis une valeur finale du décalage fréquentiel d'effet Doppler peut être calculée en effectuant une moyenne des valeurs élémentaires.

De façon générale pour l'invention, la voie d'émission du système LIDAR de l'invention peut comprendre :
- une source d'émission laser, qui est adaptée pour produire un rayonnement laser initial, ce rayonnement laser initial étant de préférence monochromatique ou quasi-monochromatique ;
- au moins un modulateur, qui est disposé pour modifier le rayonnement laser initial conformément à un signal de modulation appliqué à au moins une entrée de commande de ce modulateur ; et
- un contrôleur, qui est connecté pour appliquer le signal de modulation à l'au moins une entrée de commande du modulateur.
Le signal de modulation est alors tel que le rayonnement laser initial soit transformé par le modulateur en la série d'impulsions dans laquelle deux impulsions successives sont disjointes spectralement et ont des valeurs de longueur d'onde centrale qui sont différentes. En outre, une entrée de référence de la voie de détection, qui est utilisée pour la détection hétérodyne, peut être connectée à une sortie secondaire de la voie d'émission qui est située entre la source d'émission laser et le modulateur. Le signal optique de référence, qui est utilisé pour la détection hétérodyne, peut alors être monochromatique. Dans le signal de détection hétérodyne tel que produit par la voie de détection, les contributions de détection hétérodyne qui résultent des impulsions disjointes spectralement et dont les valeurs de longueur d'onde centrale sont différentes, sont alors décalées spectralement les unes par rapport aux autres. Autrement dit, ces contributions de détection hétérodyne ont des valeurs respectives de fréquence centrale qui sont aussi différentes. Le module d'analyse spectrale déduit alors la valeur du décalage fréquentiel d'effet Doppler de toutes ces valeurs différentes de fréquence centrale des contributions de détection hétérodyne.

Alternativement, mais bien que d'une façon moins préférée, la sortie secondaire de la voie d'émission, à laquelle est connectée l'entrée de référence de la voie de détection pour obtenir la détection hétérodyne, peut être située en aval du modulateur par rapport à un sens de propagation du rayonnement dans la voie d'émission.

Dans des premiers modes de réalisation de l'invention, la voie d'émission peut être conçue pour produire par modulation serrodyne les impulsions successives qui sont disjointes spectralement et dont les valeurs de longueur d'onde centrale sont différentes. Pour cela, le modulateur peut être un modulateur de phase, et le signal de modulation peut être un signal de modulation de phase qui est constitué par des séquences, disjointes temporellement, de rampes linéaires de décalage de phase, les rampes linéaires de décalage de phase étant identiques et successives à l'intérieur de chaque séquence et ayant des pentes différentes entre des séquences différentes. Les séquences de rampes linéaires de décalage de phase correspondent alors une-à-une aux impulsions qui sont émises par le système LIDAR. Pour de tels premiers modes de réalisation à modulation serrodyne, le modulateur de phase qui est utilisé peut être de type électro-optique.

Dans des seconds modes de réalisation de l'invention, la voie d'émission peut être conçue pour produire par modulation I&Q les impulsions successives qui sont disjointes spectralement et dont les valeurs de longueur d'onde centrale sont différentes. Pour cela, le modulateur peut comprendre un interféromètre de Mach-Zehnder de recombinaison, et deux interféromètres de Mach-Zehnder secondaires qui sont disposés un-à-un sur deux chemins optiques de propagation séparés de l'interféromètre de Mach-Zehnder de recombinaison. Il comprend alors en outre des moyens pour appliquer les déphasages suivants :
- un premier déphasage, qui est appliqué entre deux chemins optiques de propagation séparés d'un premier des deux interféromètres de Mach-Zehnder secondaires, et qui est égal à une somme de pi avec une première composante de déphasage qui varie sinusoïdalement en fonction du temps ;
- un deuxième déphasage, qui est appliqué entre deux chemins optiques de propagation séparés d'un second des deux interféromètres de Mach-Zehnder secondaires, et qui est égal à une somme de pi avec une seconde composante de déphasage qui varie sinusoïdalement en fonction du temps, les première et seconde composantes de déphasage qui varient sinusoïdalement en fonction du temps ayant une fréquence commune et étant en quadrature de phase l'une par rapport à l'autre ; et
- un troisième déphasage, qui est appliqué entre les deux chemins optiques de propagation de l'interféromètre de Mach-Zehnder de recombinaison, et qui est égal à plus ou moins la moitié de pi.
Alors, la fréquence commune des première et seconde composantes de déphasage qui varient sinusoïdalement en fonction du temps détermine un écart entre la valeur de longueur d'onde centrale de l'impulsion qui est émise et une valeur de longueur d'onde du rayonnement laser initial tel que produit par la source d'émission laser. Pour de tels modes de réalisation à modulation I&Q, l'interféromètre de Mach-Zehnder de recombinaison et les deux interféromètres de Mach-Zehnder secondaires peuvent être constitués par un circuit optique intégré.

Dans des modes préférés de réalisation de l'invention, l'une au moins des caractéristiques additionnelles suivantes peut être reproduite optionnellement, seule ou en combinaison de plusieurs d'entre elles :
- le système LIDAR peut être adapté pour fournir une estimation d'une composante de vitesse aéraulique lorsque le système est dirigé pour émettre les impulsions de rayonnement vers une portion d'atmosphère qui contient des particules en suspension formant la cible, les particules étant rétro-diffusantes pour le rayonnement ;
- chaque impulsion peut être monochromatique ou quasi-monochromatique ;
- la voie d'émission peut être conçue en outre pour que deux impulsions quelconques qui sont émises successivement soient disjointes spectralement d'au moins 10 MHz, de préférence au moins 20 MHz, et d'au plus 2000 MHz ;
- la voie d'émission peut être conçue en outre pour que la série d'impulsions répète une suite constante de valeurs de longueur d'onde centrale des impulsions. En outre, des écarts entre les valeurs de longueur d'onde centrale qui sont relatives à des couples d'impulsions émises successivement, à l'intérieur de la suite qui est répétée, peuvent être constants ;
- la voie d'émission peut être conçue en outre pour qu'un nombre des valeurs différentes de longueur d'onde centrale des impulsions de la série soit compris entre 2 et 16, les valeurs 2 et 16 étant incluses ;
- la voie d'émission peut être conçue en outre pour que des durées entre impulsions qui sont émises successivement varient au cours de la série d'impulsions. De cette façon, une zone de mesure qui serait inhibée par des réflexions des impulsions de rayonnement sur des composants optiques de la voie d'émission, peut être supprimée ; et
- la voie d'émission et/ou la voie de détection peut être réalisée par une technologie de fibres optiques, pour connecter entre eux des composants de cette voie d'émission et/ou voie de détection.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] est un schéma synoptique d'un dispositif LIDAR à impulsions et détection hétérodyne tel que connu de l'art antérieur ;
[Fig. 1b] regroupe deux diagrammes spectraux relatifs à un fonctionnement du système LIDAR de [Fig. 1a] ;
[Fig. 2] est un diagramme temporel qui montre une répartition spectrale possible pour un fonctionnement d'un système LIDAR conforme à l'invention ;
[Fig. 3a] correspond à [Fig. 1a] pour des modes de réalisation possibles de systèmes LIDAR conformes à l'invention ;
[Fig. 3b] correspond à [Fig. 1b] pour les systèmes LIDAR de [Fig. 3a] ;
[Fig. 4] regroupe deux diagrammes qui montrent des variations temporelles possibles pour un signal de modulation utilisé dans des premiers modes de réalisation de l'invention, ainsi qu'un diagramme spectral correspondant ; et
[Fig. 5] est un schéma d'un modulateur I&Q qui peut être utilisé dans des seconds modes de réalisation de l'invention.

### Description détaillée de l'invention

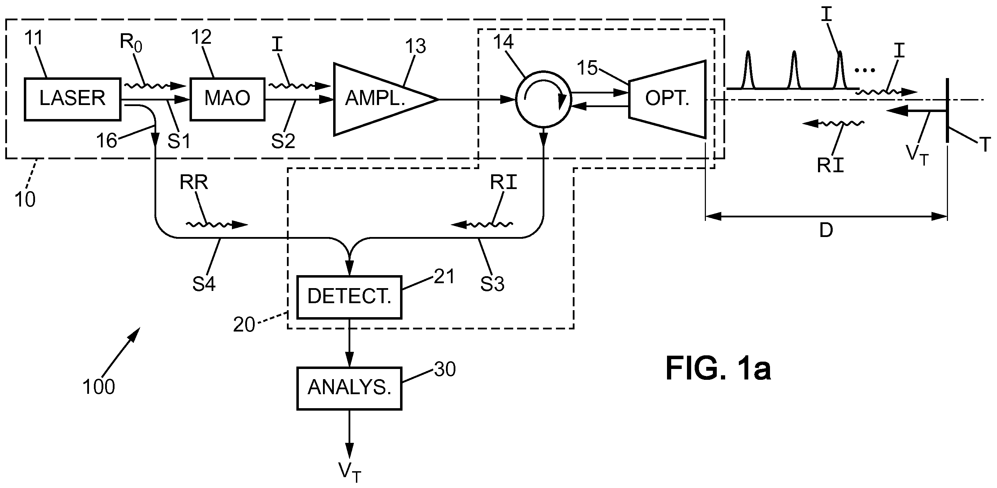

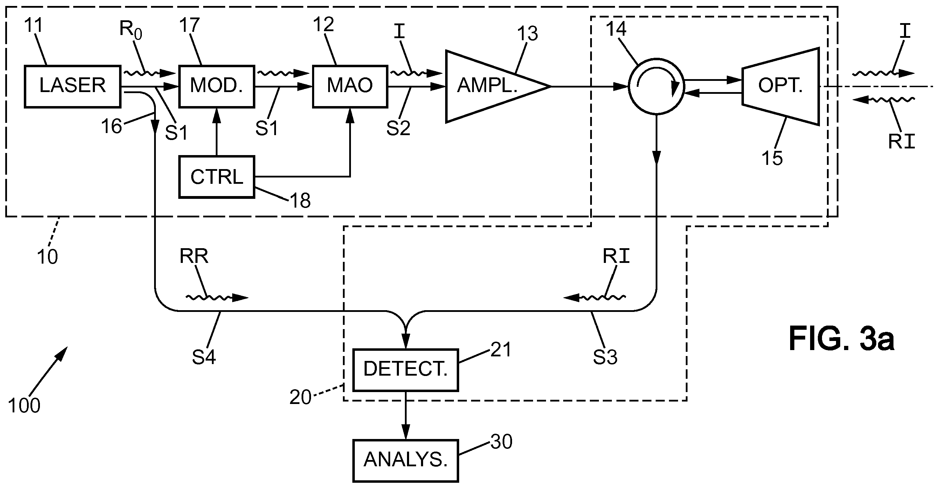

Dans ces figures, tous les composants sont représentés symboliquement, et des références identiques qui sont indiquées dans des figures différentes désignent des éléments identiques ou qui ont des fonctions identiques. Par souci de clarté, des composants dont l'utilisation dans un système LIDAR est connue de l'Homme du métier, et qui ne sont pas directement concernés par l'invention, ne sont pas décrits dans la suite. Dans ce cas, leur adaptation éventuelle à l'invention est à la portée de cet Homme du métier. Dans [Fig.1a] et [Fig. 3a], les références utilisées suivantes ont les significations qui sont indiquées maintenant :
- 100: système LIDAR à impulsions et détection hétérodyne désigné globalement,
- 10: voie d'émission,
- 11: source d'émission laser, notée LASER,
- 12: modulateur de décalage en fréquence et de découpage des impulsions, noté MAO,
- 13: amplificateur optique, noté AMPL.,
- 14: circulateur optique,
- 15: optique d'émission, noté OPT.,
- 16: sortie secondaire de la voie d'émission,
- 20: voie de détection,
- 21: détecteur hétérodyne, noté DETECT.,
- 30: module d'analyse spectrale, noté ANALYS.

[Fig. 1a] montre un système 100 tel que connu avant la présente invention.

La voie d'émission 10 comprend la source d'émission laser 11, le modulateur 12, l'amplificateur optique 13, le circulateur optique 14 et l'optique d'émission 15. La source d'émission laser 11 peut être d'un type à émission continue, avec une longueur d'onde d'émission d'environ 1550 nm (nanomètre) et une puissance de 600 µJ (microjoule), par exemple. Elle produit ainsi un rayonnement laser initial R₀ qui est monochromatique ou quasi-monochromatique. Ce rayonnement laser initial R₀ est transmis au modulateur 12. Le modulateur 12 peut être de type modulateur acousto-optique. Il est contrôlé pour former à partir du rayonnement reçu par lui, des impulsions I identiques de durées individuelles pouvant être comprises entre 200 ns (nanoseconde) et 800 ns, avec une fréquence de répétition des impulsions, PRF, qui peut être 10 kHz (kilohertz), par exemple. Simultanément, le modulateur 12 peut être contrôlé pour décaler la fréquence optique du rayonnement en lui appliquant un décalage fréquentiel Δν₀, qui peut être égal à 100 MHz (mégahertz) par exemple. Les impulsions I qui sont ainsi produites par le modulateur 12 sont amplifiées par l'amplificateur optique 13, puis transmises à l'optique d'émission 15 via le circulateur optique 14. L'optique d'émission 15 peut posséder une structure de télescope, par exemple. Les impulsions I amplifiées sont ainsi transmises en direction d'une cible T, qui est externe au système LIDAR 100 et située à une distance d'éloignement D de celui-ci, mesurée selon la direction d'émission du système 100. Par principe, la distance d'éloignement D est inférieure à la portée L du système 100, cette dernière pouvant être égale à environ 15 km (kilomètre) à titre d'exemple.

Toutes les impulsions I qui sont émises ainsi par le système 100 de [Fig. 1a] sont identiques et monochromatiques ou quasi-monochromatiques.

La sortie secondaire 16 est située dans la voie d'émission 10 entre la source d'émission laser 11 et le modulateur 12 de décalage et de découpage des impulsions I.

La voie de détection 20 partage l'optique d'émission 15 et le circulateur optique 14 avec la voie d'émission 10, et comprend en outre le détecteur hétérodyne 21. Au sein de la voie de détection 20, l'optique 15 a une fonction de collecte de parties RI des impulsions I qui ont été rétroréfléchies ou rétrodiffusées par la cible T. Le détecteur hétérodyne 21 est couplé optiquement pour recevoir les parties d'impulsions RI rétroréfléchies ou rétrodiffusées qui ont été collectées par l'optique 15, via le circulateur optique 14, et pour recevoir simultanément un signal optique de référence RR qui est prélevé de la voie d'émission 10 par la sortie secondaire 16 de cette voie d'émission. Autrement dit, cette sortie secondaire 16 est couplée optiquement au détecteur hétérodyne 21 en plus de la sortie du circulateur optique 14 qui est dédiée à la voie de détection 20. Le détecteur hétérodyne 21 peut être une photodiode, notamment de type photodiode ultrarapide, sur laquelle sont focalisés le signal optique de référence RR qui provient de la sortie secondaire 16 et les parties d'impulsions RI qui proviennent de la cible T.

Le module d'analyse spectrale 30 est configuré pour analyser spectralement les signaux de détection hétérodyne qui sont produits par le détecteur 21 lors d'un fonctionnement du système 100. Il configuré pour déduire de cette analyse spectrale une valeur d'un décalage fréquentiel qui existe entre le signal optique de référence RR et les parties d'impulsions RI. Il est configuré en outre pour convertir la valeur du décalage fréquentiel qui a été obtenue ainsi en une valeur de composante de vitesse V_{T} de la cible T, parallèle à la direction d'émission du système 100. De façon connue : V_{T} = -λ₀·(νₘ-Δν₀)/2, où :
λ₀ désigne la longueur d'onde de la source d'émission laser 11, égale à 1550 nm environ dans l'exemple donné plus haut,
Δν₀ désigne encore le décalage fréquentiel qui est appliqué par le modulateur 12, égal à 100 MHz dans l'exemple donné plus haut, et
νₘ est une fréquence du domaine radiofréquence, ou domaine RF, qui est associée à une intensité maximale ou à une position centrale de pic dans la décomposition spectrale du signal de détection hétérodyne.

Le système 100 est réalisé de préférence en utilisant une technologie de fibres optiques. Dans ce cas, l'amplificateur optique 13 peut être du type désigné par EDFA, pour «Erbium-Doped Fiber Amplifier» en anglais, ou amplificateur à fibre dopée à l'erbium. Le rayonnement laser initial R₀ est transmis par un premier segment S1 de fibre optique de la source d'émission laser 11 au modulateur 12, puis de ce dernier à l'amplificateur 13 par un deuxième segment S2 de fibre optique. En outre, les parties d'impulsions RI rétroréfléchies ou rétrodiffusées qui sont collectées par l'optique 15 sont injectées dans un troisième segment S3 de fibre optique à la sortie du circulateur optique 14 pour les amener au détecteur hétérodyne 21. En parallèle, la sortie secondaire 16 de la voie d'émission 10 est réalisée par un coupleur à fibres, et reliée au détecteur hétérodyne 21 par un quatrième segment S4 de fibre optique.

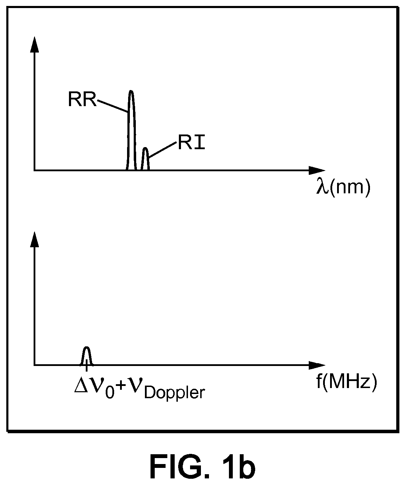

Pour un fonctionnement du système 100 qui vient d'être décrit avec une cible discrète rétroréfléchissante («retroreflecting point target» en anglais), le signal de détection hétérodyne possède une variation sinusoïdale à la fréquence νₘ. Le diagramme supérieur de [Fig. 1b] montre la composition spectrale du rayonnement qui est reçu par le détecteur hétérodyne 21. L'axe horizontal de ce diagramme supérieur de [Fig. 1b] repère les valeurs de longueur d'onde dans le domaine optique, notées λ et exprimées en nanomètres (nm). L'axe vertical, en unité arbitraire, repère les valeurs d'intensité spectrale. Le rayonnement qui est reçu par le détecteur hétérodyne 21 comprend une première contribution qui est constituée par le signal optique de référence RR amené à partir de la sortie secondaire 16, et une seconde contribution qui correspond aux parties RI des impulsions qui ont été rétroréfléchies par la cible T. Pour le système 100 de [Fig. 1a], le signal optique de référence RR est une partie du rayonnement laser initial R₀, de sorte que la contribution correspondante dans le diagramme supérieur de [Fig. 1b] est un pic très étroit, noté RR. Lorsque la cible T est située à un seul endroit sur la direction d'émission du système 100, la seconde contribution a aussi une forme de pic étroit, noté RI. Le diagramme inférieur de [Fig. 1b] montre la composition spectrale du signal de détection hétérodyne qui correspond à la composition spectrale du rayonnement reçu par le détecteur 21 telle que montrée dans le diagramme supérieur. Le signal de détection hétérodyne est alors constitué par un pic unique, dont la fréquence est νₘ=Δν₀ + ν_{Doppler}, où ν_{Doppler}≈-2·V_{T}/λ₁, λ₁ étant la valeur de longueur d'onde du rayonnement tel qu'émis par le système LIDAR 100. L'axe horizontal du diagramme inférieur de [Fig. 1b] repère les valeurs de fréquence dans le domaine RF, notées f et exprimées en mégahertz (MHz). L'axe vertical est encore en unité arbitraire pour repérer les valeurs d'intensité spectrale du signal de détection hétérodyne.

Pour un fonctionnement du système 100 qui est dédié à des mesures anémométriques, les impulsions I sont rétrodiffusées par une multiplicité de cibles qui sont réparties sur le trajet du faisceau des impulsions à l'extérieur du système 100, à partir de l'optique d'émission 15. Ces cibles, qui sont constituées par des particules ou des aérosols présents en suspension dans l'air, sont entrainées en fonction de la vitesse locale de déplacement de l'air qui existe à chaque endroit du trajet du faisceau. L'Homme du métier désigne couramment une telle répartition de cibles par «cible continue», «cible répartie» ou «cible volumique». Les parties d'impulsions RI qui sont collectées par l'optique 15 puis transmises au détecteur 21 sont alors étalées dans le temps, correspondant à des distances d'éloignement différentes selon la direction d'émission du système 100, où se produisent des rétrodiffusions partielles des impulsions I. Elles sont en outre décalées en fréquence de façon variable, en fonction de la vitesse locale du vent parallèlement à la direction d'émission à l'endroit où se produit chaque rétrodiffusion partielle. Le signal de détection hétérodyne possède alors des variations temporelles plus complexes. L'analyse spectrale qui en est effectuée par le module 30 est supposée connue : elle fournit en tant que résultat une série de valeurs de vitesse V_{T} qui sont attribuées une-à-une à des valeurs différentes de la distance d'éloignement D. De façon connue, la résolution en distance d'éloignement D est déterminée par la durée individuelle des impulsions émises I, en étant égale à cette durée individuelle divisée par deux fois la vitesse de propagation des impulsions à l'extérieur du système LIDAR 100. Par rapport aux diagrammes de [Fig. 1b], le pic qui correspond aux parties d'impulsions RI dans la composition spectrale du rayonnement reçu par le détecteur 21 est élargi. Le pic de la composition spectrale du signal de détection hétérodyne, dans le domaine RF, est élargi de façon corrélée.

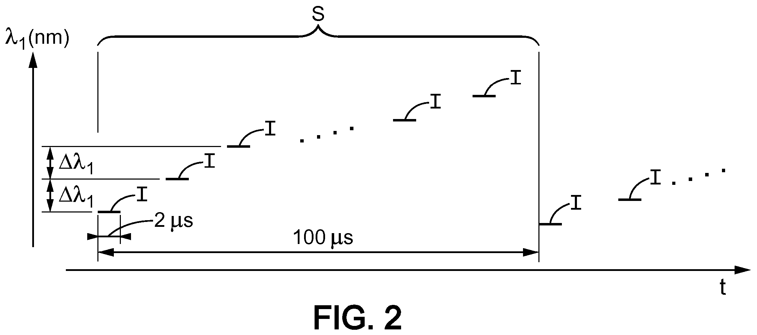

L'axe horizontal du diagramme de [Fig. 2] repère le temps, noté t, et son axe vertical repère la longueur d'onde λ₁ d'émission instantanée d'un système LIDAR 100 qui est conforme à l'invention. Cette longueur d'onde λ₁ est exprimée en nanomètres (nm). Conformément à ce diagramme, une série d'impulsions I telle qu'émise par le système LIDAR 100 peut être composée par des répétitions, par exemple 100 répétitions, d'une séquence S de plusieurs impulsions I. Par exemple, la séquence S peut avoir une durée de 100 µs (microseconde), et être constituée par dix impulsions I, chacune d'une durée individuelle qui peut être de 0,5 µs. A l'intérieur de la séquence S, les impulsions I sont avantageusement réparties avec des durées de séparation qui sont variables entre deux impulsions successives. En effet, à cause de réflexions de chaque impulsion I sur certains des composants optiques de la partie terminale de la voie d'émission 10, qui sont communs avec la voie de détection 20, l'émission de chaque impulsion I produit un signal de détection dont l'intensité très importante provoque une saturation du détecteur 21. Ce signal de détection qui est dû à des réflexions internes au système 100 est couramment appelé signal Narcisse. Il empêche de détecter, pendant sa durée, des parties d'impulsions RI qui sont reçues par le détecteur 21 en même temps que ce signal Narcisse, et qui correspondent à des impulsions I émises antérieurement puis rétroréfléchies ou rétrodiffusées par des cibles. A cause de cela, si les durées de séparation entre les impulsions qui sont émises successivement étaient toutes identiques, les signaux Narcisse empêcheraient de mesurer des vitesses relatives à des cibles situées à l'intérieur d'intervalles constants sur la direction d'émission, appelés intervalles aveugles. Varier au sein de la séquence S les durées de séparation entre impulsions successives permet alors d'obtenir des mesures de vitesse pour des cibles qui sont situées à n'importe quel endroit dans la portée du système 100, certaines des impulsions permettant de combler les intervalles aveugles causés par d'autres impulsions. Chaque impulsion I est monochromatique ou quasi-monochromatique. Ainsi, la séquence S qui est décrite correspond à dix valeurs différentes de la longueur d'onde d'émission λ. L'ordre dans lequel ces dix valeurs de longueur d'onde sont produites par le système 100 n'a pas d'importance, tant que deux impulsions qui sont émises successivement ont des valeurs différentes de longueur d'onde. En outre, les écarts entre ces valeurs de longueur d'onde peuvent être quelconques, tant que deux quelconques des impulsions de la séquence S sont suffisamment séparées spectralement pour que le décalage fréquentiel que possèdent les parties d'impulsions RI rétroréfléchies ou rétrodiffusées soit contenu dans tous les intervalles de séparation entre impulsions différentes de la séquence S. A titre d'illustration dans [Fig. 2], les impulsions I successives ont des valeurs respectives de longueur d'onde qui croissent en fonction du temps à l'intérieur de la séquence S, avec des incréments de valeur de longueur d'onde qui sont constants, notés Δλ₁. L'incrément de longueur d'onde Δλ₁ correspond à un incrément fréquentiel Δν₁ qui est égal à -C·Δλ₁/λ₀². Ce dernier peut être égal à 200 MHz, à titre d'exemple, dans le domaine RF. Toutefois, de façon générale, les écarts entre les valeurs de longueur d'onde d'impulsions peuvent ne pas être constants d'un couple de valeurs voisines à un autre.

Dans l'exemple qui vient d'être décrit, la fréquence de répétition de la séquence S est égale 10 kHz, alors que la fréquence d'impulsions qui est effective pour mesurer des vitesses de cibles, i.e. la fréquence PRF, est égale au produit de cette fréquence de répétition de la séquence S par le nombre d'impulsions dans la séquence, soit 100 kHz.

Un tel fonctionnement conforme à l'invention peut être produit par un système LIDAR 100 tel que représenté dans [Fig. 3a]. Ce système possède une architecture matérielle qui est similaire à celle de [Fig. 1a], hormis que la voie d'émission 10 comprend en outre un modulateur supplémentaire 17, noté MOD., et un contrôleur 18, noté CTRL. Le modulateur 17 est inséré dans le premier segment S1 de fibre optique, entre la source d'émission laser 11 et le modulateur électro-acoustique 12. Deux constitutions possibles pour le modulateur 17 seront décrites plus loin. Le modulateur 17, en association avec le contrôleur 18, transforme le rayonnement laser initial R₀ en une série d'impulsions monochromatiques à valeurs variables de longueur d'onde telle que décrite plus haut en référence à [Fig. 2]. Le contrôleur 18 pilote simultanément le modulateur 12, pour produire les durées variables de séparation entre impulsions successives. En outre, le modulateur 12 applique le décalage fréquentiel Δν₀ à chacune des impulsions telles que produites par le modulateur 17.

Lorsqu'elle est rétroréfléchie, chaque impulsion I est décalée spectralement du fait de l'effet Doppler. Etant donné que l'incrément fréquentiel Δν₁ est très inférieur à la fréquence optique qui correspond à la longueur d'onde λ₀, toutes les impulsions subissent le même décalage fréquentiel d'effet Doppler ν_{Doppler}. En outre, l'incrément fréquentiel Δν₁ est choisi pour être supérieur à toutes les valeurs possiblement attendues pour le décalage fréquentiel d'effet Doppler ν_{Doppler} ajouté au décalage fréquentiel Δν₀.

La sortie secondaire 16 de la voie d'émission 10 est située maintenant entre la source d'émission laser 11 et le modulateur 17. De cette façon, le signal optique de référence RR qui est amené au détecteur hétérodyne 21 est encore constitué par une partie du rayonnement laser initial R₀. Notamment, il est encore monochromatique.

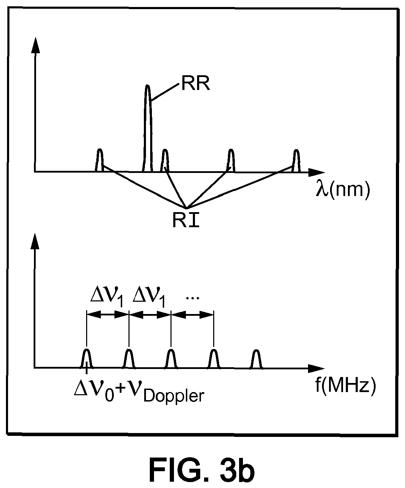

Comme montré par le diagramme supérieur de [Fig. 3b], la composition spectrale du rayonnement qui est reçu par le détecteur hétérodyne 21 comprend alors encore le pic RR qui correspond à l'émission de la source laser 11, mais elle comprend aussi plusieurs pics additionnels RI qui correspondent aux parties d'impulsions qui ont été rétroréfléchies ou rétrodiffusées puis collectées par l'optique 15. Ces pics RI proviennent de toutes les valeurs de longueur d'onde des impulsions I qui sont émises, et contiennent l'information de mesure. Ils sont décalés spectralement par rapport aux impulsions I de ν_{Doppler}, en termes de fréquence optique. Lors de la détection hétérodyne, chaque pic RI forme une interférence avec le pic RR. Comme le montre le diagramme inférieur de [Fig. 3b], le signal de détection hétérodyne est alors composé d'autant de pics que de valeurs différentes de longueur d'onde pour les impulsions I. Les deux diagrammes de [Fig. 3b] correspondent au cas où les valeurs de longueur d'onde des impulsions I sont séparées conformément à l'incrément fréquentiel contant Δν₁. Le module d'analyse spectrale 30 détermine alors la valeur du décalage fréquentiel d'effet Doppler ν_{Doppler} d'après les valeurs de fréquence RF qui sont mesurées pour tous les pics du signal de détection hétérodyne. Par exemple, une valeur élémentaire est déterminée pour ν_{Doppler} à partir de la valeur de fréquence centrale de chacun des pics du signal de détection hétérodyne, et la valeur finale de ν_{Doppler} est calculée en effectuant une moyenne de ces valeurs élémentaires. Etant donné que tous les pics du signal de détection hétérodyne correspondent à des contributions qui sont incohérentes entre elles, le signal de détection hétérodyne possède une valeur de rapport signal-sur-bruit qui est augmentée d'un facteur n^{1/2}, où n est le nombre des valeurs différentes de longueur d'onde des impulsions I.

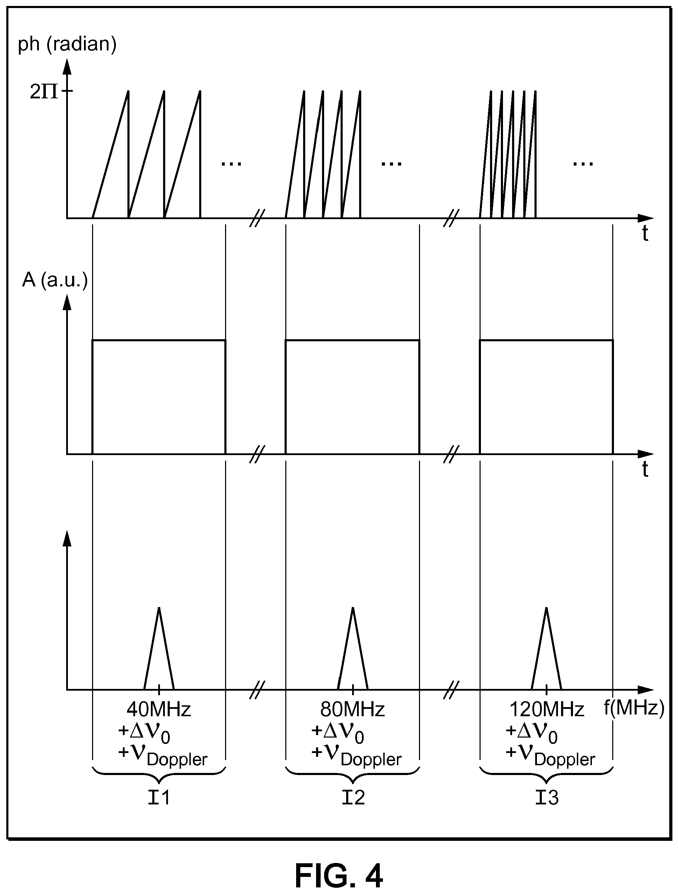

Dans des premiers modes de réalisation de l'invention, les impulsions monochromatiques I aux valeurs variables de longueur d'onde à l'intérieur de la séquence S peuvent être produites par modulation serrodyne. Dans ce cas, le modulateur 17 peut être du type modulateur électro-optique, et le contrôleur 18 est adapté pour appliquer un signal de modulation serrodyne à l'entrée de commande du modulateur 17. Le principe d'une telle modulation est supposé connu de l'Homme du métier. Si nécessaire, on pourra se reporter à l'article intitulé «New coherent Doppler Lidar engine integrating optical transceiver with FPGA signal processor», de Toshiyuki Ando, Eisuke Haraguchi(a) et Hitomi Ono(a), 18th Coherent Laser Radar Conference (2016). Conformément aux deux premiers diagrammes de [Fig. 4], ce signal de modulation est composé, pour chaque impulsion I de rayonnement à émettre, d'une succession de rampes de phase linéaires, identiques et accolées temporellement. Chaque rampe de phase varie individuellement de 0 à 2π. La succession des rampes de phase occupe toute la durée de l'impulsion. Ces rampes de phase provoquent une augmentation de la vitesse de variation de la phase du rayonnement, produisant ainsi le décalage de fréquence optique qui est voulu pour l'impulsion concernée. Ce décalage de fréquence optique est directement égal à la pente des rampes de phase, divisée par 2·π. Cette pente de rampes de phase qui est constante pendant la durée de chaque impulsion I, varie entre deux impulsions successives. Elle peut être positive ou négative, selon que la longueur d'onde de l'impulsion à la sortie du modulateur 17 est inférieure ou supérieure à la longueur d'onde λ₀ du rayonnement laser initial R₀. Le diagramme supérieur de [Fig. 4] montre un tel signal de modulation serrodyne. L'axe horizontal repère le temps t, et l'axe vertical repère le déphasage qui est créé par la modulation, noté ph. et exprimé en radians. La première impulsion représentée, notée I1, peut correspondre à un décalage de fréquence optique qui est égal à 40 MHz, par rapport à la fréquence optique du rayonnement laser initial R₀. Pour cela, la pente de ses rampes de phase est égale à 2·π·40 MHz. Les rampes de phase de la deuxième impulsion, notée I2, étant deux fois plus raides que celles de l'impulsion I1, le décalage correspondant pour la fréquence optique de l'impulsion I2 est alors égal à 80 MHz. De façon similaire, les rampes de phase de la troisième impulsion, notée I3, étant trois fois plus raides que celles de l'impulsion I1, le décalage de fréquence optique de l'impulsion I3 est alors égal à 120 MHz. Etc, pour raison de clarté des diagrammes de [Fig. 4], seulement trois des dix impulsions de la séquence S ont été représentées. Dans le fonctionnement du système LIDAR 100 de [Fig. 3a], le décalage Δν₀ qui est produit par le modulateur 12 s'ajoute aux décalages précédents qui sont produits par le modulateur 17. Le diagramme intermédiaire de [Fig. 4] montre que la modulation serrodyne ne modifie pas l'amplitude du rayonnement qui est transmis par le modulateur 17. L'axe horizontal de ce diagramme intermédiaire repère encore le temps t, et l'axe vertical repère, en unité arbitraire (a.u.), le facteur d'atténuation qui est produit par le modulateur 17 sur l'intensité du rayonnement, et qui est noté A. Ce facteur est sensiblement constant, et aussi proche que possible de l'unité. Enfin, le diagramme inférieur de [Fig. 4] montre la répartition fréquentielle du signal de détection hétérodyne qui en résulte. L'axe horizontal de ce diagramme inférieur repère les valeurs de la fréquence f dans le domaine RF, et l'axe vertical repère la densité de puissance spectrale du signal de détection hétérodyne. Le pic qui correspond aux impulsions I1 dans toutes les répétitions de la séquence S des impulsions émises, est donc centré sur la valeur 40 MHz + Δν₀ + ν_{Doppler}, le pic qui correspond aux impulsions I2 est centré sur la valeur 80 MHz + Δν₀ + ν_{Doppler}, le pic qui correspond aux impulsions I3 est centré sur la valeur 120 MHz + Δν₀ + ν_{Doppler}, etc. Cet exemple de modulation serrodyne correspond à l'incrément fréquentiel Δν₁=40 MHz.

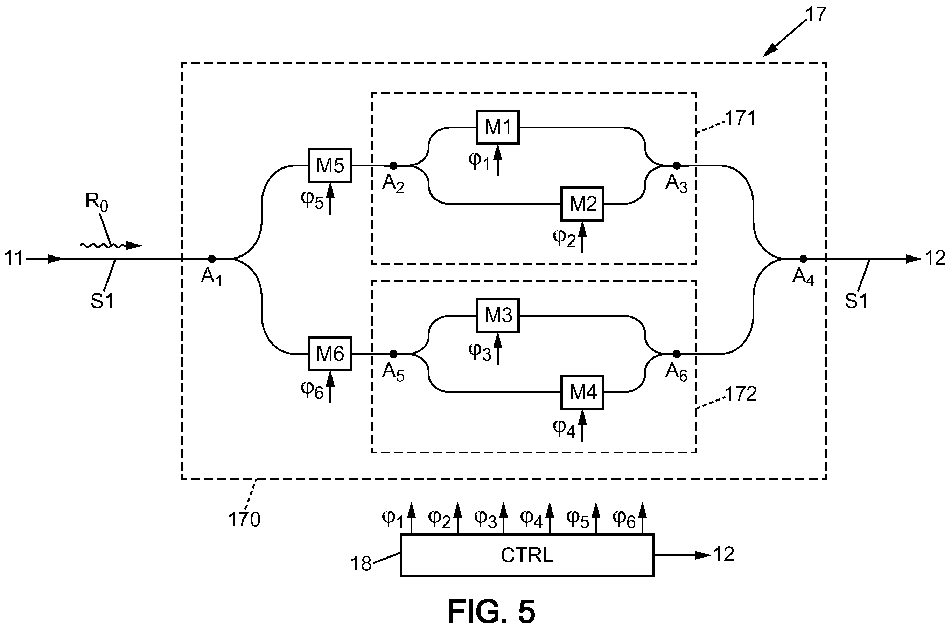

Dans des seconds modes de réalisation de l'invention, les impulsions monochromatiques I aux valeurs variables de longueur d'onde peuvent être produites par modulation I&Q. Dans ce cas, le modulateur 17 peut être d'un type tel que décrit dans l'article intitulé «Tunable Frequency Shifter Based on LiNbOs I&Q Modulators», de Alexandre Mottet, Nicolas Bourriot et Jérôme Hauden, Photline Technologies, ZI Les Tilleroyes - Trépillot, 16 rue Auguste Jouchoux, 25000 Besançon, France, ou dans l'article intitulé «Integrated optical SSB modulator/frequency shifter», de Masayuki Izutsu, Shinsuke Shikama et Tadasi Sueta., IEEE Journal of Quantum Electronics 17, no 11 (novembre 1981): 2225 27, https://doi.org/10.1109/JQE.1981.1070678. Il est constitué par un interféromètre principal de type Mach-Zehnder, aussi appelé interféromètre de recombinaison, qui est connecté en entrée pour recevoir le rayonnement laser initial R₀ de la source d'émission laser 11, et connecté en sortie à l'entrée optique du modulateur acousto-optique 12. Conformément à [Fig. 5], cet interféromètre de recombinaison, désigné par la référence 170, possède deux chemins optiques de propagation qui sont disposés en parallèle entre la source 11 et le modulateur 12 : le chemin A₁A₂A₃A₄ et le chemin A₁A₅A₆A₄. Le chemin A₁A₂A₃A₄ comporte un modulateur électro-optique M5 entre les points A₁ et A₂, et un autre interféromètre de Mach-Zehnder entre les points A₂ et A₃, qui est appelé interféromètre secondaire et désigné par la référence 171. L'interféromètre secondaire 171 comporte lui-même deux chemins optiques de propagation qui sont disposés en parallèle entre les points A₂ et A₃. Chacun de ces deux chemins de l'interféromètre secondaire 171 comporte un modulateur électro-optique, M1 et M2 respectivement. Le chemin A₁A₅A₆A₄ possède une structure identique à celle du chemin A₁A₂A₃A₄. Il comporte un autre modulateur électro-optique M6 entre les points A₁ et A₅, et un autre interféromètre de Mach-Zehnder secondaire entre les points A₅ et A₆, qui est désigné par la référence 172. L'interféromètre secondaire 172 comporte lui-même deux chemins optiques de propagation qui sont disposés en parallèle entre les points A₅ et A₆. Chacun de ces deux derniers chemins comporte un modulateur électro-optique, M3 et M4 respectivement. Un tel modulateur 17 peut être réalisé sous forme d'un circuit optique intégré, avec les modulateurs électro-optiques M1-M6 qui sont réalisés à base de portions de niobiate de lithium (LiNbOs) associées à des électrodes respectives. Plusieurs technologies de circuits optiques intégrés sont connues de l'Homme du métier, qui peuvent être utilisées pour un tel mode de réalisation d'un système LIDAR 100 conforme à l'invention.

Le contrôleur 18 applique des tensions électriques aux électrodes respectives des modulateurs électro-optiques M1-M6, pour que chacun de ceux-ci génère un déphasage optique pour la partie du rayonnement laser initial R₀ qui est transmise par lui. Ainsi, le modulateur Mi génère le déphasage optique φᵢ, où i est un indice entier naturel qui varie de 1 à 6. Dans ces conditions, l'interféromètre de Mach-Zehnder secondaire 171 applique un premier déphasage entre ses deux chemins optiques de propagation qui relient les points A₂ et A₃. Ce premier déphasage est Φ₁ = φ₁-φ₂. De même, l'interféromètre de Mach-Zehnder secondaire 172 applique un deuxième déphasage, Φ₂, entre ses deux chemins optiques de propagation qui relient les points A₅ et A₆: Φ₂ = φ₃-φ₄. Enfin, l'interféromètre de Mach-Zehnder de recombinaison 170 applique un troisième déphasage, Φ₃, entre les deux chemins optiques de propagation A₁A₂A₃A₄ et A₁A₅A₆A₄ : Φ₃ = φ₅-φ₆. Alors, le modulateur 17 possède une fonction de décalage de fréquence optique pour le rayonnement laser initial R₀ lorsque le contrôleur 18 applique aux modulateurs électro-optiques M1-M6 des tensions électriques telles que : ${Φ}_{1} = {φ}_{1} - {φ}_{2} = π + α ⋅ sin \left({Δv}_{1}⋅t\right) ,$ ${Φ}_{2} = {φ}_{3} - {φ}_{4} = π + α ⋅ sin \left({Δv}_{1}⋅t+\pm π/2\right) , et$ ${Φ}_{3} = {φ}_{5} - {φ}_{6} = \pm π / 2 .$ Ainsi, les déphasages Φ₁ et Φ₂ possèdent des variations sinusoïdales en fonction du temps t, selon une fréquence qui est destinée à être égale au décalage de fréquence optique Δv₁ qui a été introduit plus haut, et qui appartient au domaine RF. Pour produire les tensions électriques de commande des modulateurs électro-optiques M1-M6, le contrôleur 18 peut incorporer un générateur électrique de type AWG, pour «Arbitrary Waveform Generator» en anglais, ou générateur de formes d'ondes arbitraires.

Bien que la mise en œuvre de la résolution en distance n'ait pas été décrite en liaison avec les modes de réalisation de l'invention présentés ci-dessus, pour obtenir des résultats de mesure de vitesse qui sont relatifs à des valeurs échantillonnées de distance d'éloignement, le principe d'obtention d'une telle résolution en distance peut être repris tel qu'il a été rappelé pour le système 100 de [Fig. 1a].

Pour tous les modes de réalisation de l'invention, chaque impulsion peut avoir une valeur individuelle de puissance-crête qui est juste inférieure à un seuil de diffusion de Brillouin stimulée qui se produit dans les segments de fibre optique S1 et S2 ainsi que dans l'amplificateur optique 13, le circulateur optique 14 et les segments de fibre optique entre ceux-ci et jusqu'à l'optique d'émission 15. A valeur identique de la portée L du système 100, le nombre total d'impulsions est multiplié par le nombre n des valeurs différentes de longueur d'onde des impulsions, alors que l'énergie individuelle de chaque impulsion peut être identique à celle utilisée avant l'invention. Une amélioration d'un facteur n^{1/2} est ainsi obtenue, pour le fonctionnement du système LIDAR à détection hétérodyne. Les systèmes LIDAR à impulsions et détection hétérodyne conformes à l'invention sont donc particulièrement adaptés à des conditions de mesure où les parties d'impulsions rétroréfléchies ou rétrodiffusées ont des puissances faibles ou très faibles. Ils sont donc tout spécialement appropriés pour effectuer des mesures anémométriques.

Il est entendu que l'invention peut être reproduite en modifiant des aspects secondaires des modes de réalisation qui ont été décrits en détail ci-dessus, tout en conservant certains au moins des avantages cités. Notamment, les modifications suivantes sont possibles :
- certains des composants utilisés dans les modes de réalisation décrits peuvent être remplacés par d'autres composants ou par des combinaisons de composants qui produisent des fonctions équivalentes. Par exemple, chaque modulateur acousto-optique peut être remplacé par un amplificateur optique à semiconducteur, ou SOA pour «Semiconductor Optical Amplifier» en anglais, utilisé en tant que modulateur ;
- par rapport à l'architecture de système LIDAR de [Fig. 3a], la sortie secondaire 16 de la voie d'émission 10 peut être déplacée entre le modulateur électro-optique 17 et le modulateur électro-acoustique 12. Un fonctionnement de détection de type hétérodyne est encore obtenu en connectant l'entrée de référence de la voie de détection 20 à la sortie secondaire 16 dans cette nouvelle position. Le signal de détection hétérodyne est alors constitué d'un ou plusieurs pic(s) primaire(s) qui correspond(ent) à la détection d'une ou plusieurs cible(s) présente(s) dans la portée L du système LIDAR telle que limitée par la fréquence de répétition des impulsions PRF, et de pics) secondaire(s) qui est (sont) décalé(s) principalement selon les écarts spectraux entre les impulsions de la série, et qui correspondent à une ou plusieurs cible(s) supplémentaire(s) présente(s) au-delà de la portée L, et pour lesquelles les parties d'impulsions qu'elles rétrodiffusent sont détectées après l'émission d'au moins une impulsion suivante, postérieurement à celle qui est à l'origine de chaque partie d'impulsion rétrodiffusée par une des cibles supplémentaires ; et
- toutes les valeurs numériques qui ont été citées ne l'ont été qu'à titre d'illustration, et peuvent être changées en fonction de l'application considérée du système LIDAR à impulsions et à détection hétérodyne.

## Revendications

1. Système LIDAR (100) à impulsions, adapté pour déterminer une valeur d'un décalage fréquentiel d'effet Doppler (ν_{Doppler}) qui est subi par une série d'impulsions (I) de rayonnement émises successivement par le système en direction d'une cible (T), entre des parties (RI) des impulsions telles que reçues après rétro-réflexion ou rétrodiffusion sur la cible et lesdites impulsions telles qu'émises par le système, et pour fournir, à partir de la valeur déterminée pour le décalage fréquentiel, une estimation d'une composante de vitesse (V_{T}) de la cible qui est parallèle à une direction d'émission optique du système,
le système (100) comprenant :
- une voie d'émission (10), conçue pour produire la série d'impulsions (1),
- une voie de détection (20), conçue pour détecter les parties (RI) des impulsions reçues après rétro-réflexion ou rétrodiffusion sur la cible (T), et pour produire des signaux de détection hétérodyne qui correspondent aux impulsions (I) de la série, et
- un module d'analyse spectrale (30), adapté pour effectuer une analyse spectrale des signaux de détection hétérodyne, de sorte que la valeur du décalage fréquentiel (ν_{Doppler}) résulte de contributions de détection hétérodyne qui correspondent aux impulsions (I) de la série,
le système (100) étant **caractérisé en ce qu'**il est adapté pour fournir une estimation d'une composante de vitesse aéraulique lorsque le système est dirigé pour émettre les impulsions (I) de rayonnement vers une portion d'atmosphère qui contient des particules en suspension formant la cible (T), les particules étant rétro-diffusantes pour ledit rayonnement,
et **en ce que** :
- la voie d'émission (10) est conçue en outre pour que deux impulsions (I) qui sont émises successivement en direction de la cible (T), soient disjointes spectralement et associées à des valeurs respectives de longueur d'onde centrale qui sont différentes, et
- le système (100) est adapté pour que la valeur du décalage fréquentiel d'effet Doppler (ν_{Doppler}) qui est déterminée par le module d'analyse spectrale (30) résulte d'une combinaison de plusieurs contributions de détection hétérodyne qui correspondent respectivement aux impulsions disjointes spectralement et dont les valeurs de longueur d'onde centrale sont différentes, en déterminant une valeur élémentaire pour ledit décalage fréquentiel d'effet Doppler à partir de chaque contribution spectrale de détection hétérodyne, indépendamment des autres contributions spectrales de détection hétérodyne, puis en effectuant une moyenne des valeurs élémentaires pour calculer une valeur finale du décalage fréquentiel d'effet Doppler.

2. Système LIDAR (100) à impulsions selon la revendication 1 , dans lequel la voie d'émission (10) est conçue en outre pour que deux impulsions (I) quelconques qui sont émises successivement soient disjointes spectralement d'au moins 10 MHz, de préférence au moins 20 MHz, et d'au plus 2000 MHz.

3. Système LIDAR (100) à impulsions selon l'une quelconque des revendications précédentes, dans lequel la voie d'émission (10) est conçue en outre pour que la série d'impulsions (I) répète une suite constante de valeurs de longueur d'onde centrale des impulsions.

4. Système LIDAR (100) à impulsions selon la revendication 3, dans lequel la voie d'émission (10) est conçue en outre pour que des écarts entre les valeurs de longueur d'onde centrale qui sont relatives à des couples d'impulsions (I) émises successivement, à l'intérieur de la suite qui est répétée, soient constants.

5. Système LIDAR (100) à impulsions selon l'une quelconque des revendications précédentes, dans lequel la voie d'émission (10) est conçue en outre pour qu'un nombre des valeurs différentes de longueur d'onde centrale des impulsions (1) de la série soit compris entre 2 et 16, les valeurs 2 et 16 étant incluses.

6. Système LIDAR (100) à impulsions selon l'une quelconque des revendications précédentes, dans lequel la voie d'émission (10) est conçue en outre pour que des durées entre impulsions (I) qui sont émises successivement varient au cours de la série d'impulsions.

7. Système LIDAR (100) selon l'une quelconque des revendications précédentes, dans lequel la voie d'émission (10) comprend :
- une source d'émission laser (11), qui est adapté pour produire un rayonnement laser initial (R₀) ;
- au moins un modulateur (17), qui est disposé pour modifier le rayonnement laser initial (R₀) conformément à un signal de modulation appliqué à au moins une entrée de commande dudit modulateur ; et
- un contrôleur (18), qui est connecté pour appliquer le signal de modulation à ladite au moins une entrée de commande,
ledit signal de modulation étant tel que le rayonnement laser initial (R₀) soit transformé par le modulateur (17) en la série d'impulsions (I) dans laquelle deux impulsions successives sont disjointes spectralement et ont des valeurs de longueur d'onde centrale qui sont différentes,
et une entrée de référence de la voie de détection (20), qui est utilisée pour la détection hétérodyne, est connectée à une sortie secondaire (16) de la voie d'émission (10) qui est située entre la source d'émission laser (11) et le modulateur (17).

8. Système LIDAR (100) selon la revendication 7, dans lequel le modulateur (17) est un modulateur de phase,
et le signal de modulation est un signal de modulation de phase constitué par des séquences (S), disjointes temporellement, de rampes linéaires de décalage de phase, les rampes linéaires de décalage de phase étant identiques et successives à l'intérieur de chaque séquence, et ayant des pentes différentes entre des séquences différentes, et les séquences de rampes linéaires de décalage de phase correspondant une-à-une aux impulsions (I) qui sont émises par le système LIDAR (100).

9. Système LIDAR (100) selon la revendication 7, dans lequel le modulateur (17) comprend un interféromètre de Mach-Zehnder de recombinaison (170), et deux interféromètres de Mach-Zehnder secondaires (171, 172) qui sont disposés un-à-un sur deux chemins optiques de propagation séparés de l'interféromètre de Mach-Zehnder de recombinaison, et comprend des moyens pour appliquer les déphasages suivants :
- un premier déphasage, qui est appliqué entre deux chemins optiques de propagation séparés d'un premier des deux interféromètres de Mach-Zehnder secondaires (171, 172), et qui est égal à une somme de pi avec une première composante de déphasage qui varie sinusoïdalement en fonction du temps ;
- un deuxième déphasage, qui est appliqué entre deux chemins optiques de propagation séparés d'un second des deux interféromètres de Mach-Zehnder secondaires (171, 172), et qui est égal à une somme de pi avec une seconde composante de déphasage qui varie sinusoïdalement en fonction du temps, lesdites première et seconde composantes de déphasage qui varient sinusoïdalement en fonction du temps ayant une fréquence commune et étant en quadrature de phase l'une par rapport à l'autre ; et
- un troisième déphasage, qui est appliqué entre les deux chemins optiques de propagation de l'interféromètre de Mach-Zehnder de recombinaison (170), et qui est égal à plus ou moins une moitié de pi,
la fréquence commune des première et seconde composantes de déphasage qui varient sinusoïdalement en fonction du temps déterminant un écart entre la valeur de longueur d'onde centrale de l'impulsion (I) qui est émise et une valeur de longueur d'onde du rayonnement laser initial (R₀) qui est produit par la source d'émission laser (11).

10. Système LIDAR (100) selon l'une quelconque des revendications précédentes, dans lequel la voie d'émission (10) et/ou la voie de détection (20) est réalisée par une technologie de fibres optiques, pour connecter entre eux des composants de ladite voie d'émission et/ou voie de détection.

## Patentansprüche

1. Gepulstes LIDAR-System (100), das zum Bestimmen eines Werts einer Dopplereffekt-Frequenzverschiebung (ν_{Doppler}), der eine Reihe von Strahlungsimpulsen (I) unterworfen ist, die aufeinanderfolgend durch das System in Richtung eines Ziels (T) emittiert werden, zwischen Teilen der Impulse, wie zum Beispiel nach Rückreflexion oder Rückstreuung an dem Ziel empfangen, und den Impulsen, wie zum Beispiel durch das System emittiert, und zum Bereitstellen, aus dem Wert, der durch die Frequenzverschiebung bestimmt wird, einer Schätzung einer Geschwindigkeitskomponente (Vₜ) des Ziels angepasst ist, die parallel zu einer optischen Emissionsrichtung des Systems ist,
das System (100) umfassend:
- einen Emissionspfad (10), der zum Erzeugen der Reihe von Impulsen (I) eingerichtet ist,
- einen Detektionspfad (20), der zum Detektieren der Teile der nach Rückreflexion oder Rückstreuung an dem Ziel (T) empfangenen Impulse (RI) und zum Erzeugen von Heterodyndetektionssignalen eingerichtet ist, die den Impulsen (I) der Reihe entsprechen, und
- ein Spektralanalysemodul (30), das zum Bewirken einer Spektralanalyse der Heterodyndetektionssignale angepasst ist, sodass der Wert der Frequenzverschiebung (ν_{Doppler}) aus Heterodyndetektionsbeiträgen, die den Impulsen (I) der Reihe entsprechen, resultiert,
wobei das System (100) **dadurch gekennzeichnet ist, dass** es zum Bereitstellen einer Schätzung einer Luftgeschwindigkeitskomponente angepasst ist, wenn das System zum Emittieren von Strahlungsimpulsen (I) in Richtung eines Abschnitts der Atmosphäre ausgerichtet ist, der suspendierte Teilchen enthält, die das Ziel (T) ausbilden, wobei die Teilchen für die Strahlung rückstreuend sind,
**und dadurch, dass**:
- der Emissionspfad (10) ferner eingerichtet ist, damit zwei Impulse (I), die aufeinanderfolgend in Richtung des Ziels (T) emittiert werden, spektral getrennt sind und jeweiligen Werten der zentralen Wellenlänge zugeordnet sind, die unterschiedlich sind, und
- das System (100) angepasst ist, damit der Wert der Dopplereffekt-Frequenzverschiebung (v_{Doppler}), der durch das Spektralanalysemodul (30) bestimmt wird, aus einer Kombination mehrerer Heterodyndetektionsbeiträge resultiert, die jeweils den spektral getrennten Impulsen entsprechen und deren Werte der zentralen Wellenlänge unterschiedlich sind, durch Bestimmen eines Elementarwerts für die Dopplereffekt-Frequenzverschiebung aus jedem spektralen Heterodyndetektionsbeitrag, unabhängig von den anderen spektralen Heterodyndetektionsbeiträgen, dann durch Bewirken eines Mittelwerts der Elementarwerte zum Berechnen eines Endwerts der Dopplereffekt-Frequenzverschiebung.

2. Gepulstes LIDAR-System (100) nach Anspruch 1, wobei der Emissionspfad (10) ferner eingerichtet ist, damit die zwei Impulse (I), die aufeinanderfolgend emittiert werden, um mindestens 10 MHz, vorzugsweise mindestens 20 MHz, und höchstens 2000 MHz spektral getrennt sind.

3. Gepulstes LIDAR-System (100) nach einem der vorstehenden Ansprüche, wobei der Emissionspfad (10) ferner eingerichtet ist, damit die Reihe von Impulsen (I) eine konstante Abfolge von Werten der zentralen Wellenlänge der Impulse wiederholt.

4. Gepulstes LIDAR-System (100) nach Anspruch 3, wobei der Emissionspfad (10) ferner eingerichtet ist, damit Abweichungen zwischen den Werten der zentralen Wellenlänge, die sich auf Paare von aufeinanderfolgend emittierten Impulsen (I) beziehen, innerhalb der wiederholten Abfolge konstant sind.

5. Gepulstes LIDAR-System (100) nach einem der vorstehenden Ansprüche, wobei der Emissionspfad (10) ferner eingerichtet ist, damit eine Anzahl von unterschiedlichen Werten der zentralen Wellenlänge der Impulse (I) der Reihe zwischen 2 und 16 liegt, wobei die Werte 2 und 16 eingeschlossen sind.

6. Gepulstes LIDAR-System (100) nach einem der vorstehenden Ansprüche, wobei der Emissionspfad (10) ferner eingerichtet ist, damit Dauern zwischen Impulsen (I), die aufeinanderfolgend emittiert werden, im Verlauf der Reihe von Impulsen variieren.

7. LIDAR-System (100) nach einem der vorstehenden Ansprüche, wobei der Emissionspfad (10) umfasst:
- eine Laseremissionsquelle (11), die zum Erzeugen einer anfänglichen Laserstrahlung (R₀) angepasst ist;
- mindestens einen Modulator (17), der zum Modifizieren der anfänglichen Laserstrahlung (R₀) gemäß einem Modulationssignal angeordnet ist, das an mindestens einen Steuereingang des Modulators angelegt wird; und
- einen Kontroller (18), der zum Anlegen des Modulationssignals an den mindestens einen Steuereingang verbunden ist,
wobei das Modulationssignal derart ist, dass die anfängliche Laserstrahlung (R₀) durch den Modulator (17) in die Reihe von Impulsen (I) umgewandelt wird, in der zwei aufeinanderfolgende Impulse spektral getrennt sind und Werte der zentralen Wellenlänge besitzen, die unterschiedlich sind,
und ein Referenzeingang des Detektionspfads (20), der für die Heterodyndetektion verwendet wird, mit einem Sekundärausgang (16) des Emissionspfads (10) verbunden ist, der zwischen der Laseremissionsquelle (11) und dem Modulator (17) gelegen ist.

8. LIDAR-System (100) nach Anspruch 7, wobei der Modulator (17) ein Phasenmodulator ist,
und das Modulationssignal ein Phasenmodulationssignal ist, das aus zeitlich getrennten Sequenzen (S) von linearen Phasenverschiebungsrampen besteht, wobei die linearen Phasenverschiebungsrampen innerhalb jeder Sequenz identisch und aufeinanderfolgend sind und zwischen verschiedenen Sequenzen unterschiedliche Steigungen besitzen, und die Sequenzen von linearen Phasenverschiebungsrampen eins-zu-eins den Impulsen (I) entsprechen, die durch das LIDAR-System (100) emittiert werden.

9. LIDAR-System (100) nach Anspruch 7, wobei der Modulator (17) ein Rekombinations-Mach-Zehnder-Interferometer (170) und zwei sekundäre Mach-Zehnder-Interferometer (171, 172) umfasst, die jeweils eins-zu-eins auf zwei abgetrennten optischen Ausbreitungspfaden des Rekombinations-Mach-Zehnder-Interferometers angeordnet sind, und Mittel zum Anlegen der folgenden Phasenverschiebungen umfasst:
- einer ersten Phasenverschiebung, die zwischen zwei abgetrennten optischen Ausbreitungswegen eines ersten der zwei sekundären Mach-Zehnder-Interferometer (171, 172) angelegt wird und die gleich einer Summe aus Pi und einer ersten Phasenverschiebungskomponente ist, die zeitlich sinusförmig variiert;
- einer zweiten Phasenverschiebung, die zwischen zwei abgetrennten optischen Ausbreitungswegen eines zweiten der zwei sekundären Mach-Zehnder-Interferometer (171, 172) angelegt wird und die gleich einer Summe aus Pi und einer zweiten Phasenverschiebungskomponente ist, die in Abhängigkeit von der Zeit sinusförmig variiert, wobei die erste und die zweite Phasenverschiebungskomponente, die in Abhängigkeit von der Zeit sinusförmig variieren, eine gemeinsame Frequenz besitzen und zueinander in Phasenquadratur stehen; und
- einer dritten Phasenverschiebung, die zwischen den zwei optischen Ausbreitungswegen des Rekombinations-Mach-Zehnder-Interferometers (170) angelegt wird und die gleich plus oder minus einer Hälfte von Pi ist,
wobei die gemeinsame Frequenz der ersten und der zweiten Phasenverschiebungskomponente, die in Abhängigkeit von der Zeit sinusförmig variieren, eine Abweichung zwischen dem Wert der zentralen Wellenlänge des Impulses (I), der emittiert wird, und einem Wellenlängenwert der anfänglichen Laserstrahlung (R₀) bestimmt, die durch die Laseremissionsquelle (11) erzeugt wird.

10. Gepulstes LIDAR-System (100) nach einem der vorstehenden Ansprüche, wobei der Emissionspfad (10) und/oder der Detektionspfad (20) zum Verbinden von Komponenten des Emissionspfads und/oder des Detektionspfads miteinander durch Glasfasertechnologie umgesetzt ist.

## Claims

1. A pulsed LIDAR system (100), adapted to determine a value of a Doppler effect frequency shift (ν_{Doppler}) which is undergone by a series of radiation pulses (I) successively emitted by the system towards a target (T), between portions (RI) of the pulses as received after retroreflection or backscattering on the target and said pulses as emitted by the system, and to provide, based on the value determined for the frequency shift, an estimate of a speed component (V_{T}) of the target which is parallel to an optical direction of emission of the system,
the system (100) comprising:
- a transmission path (10), configured to produce the series of pulses (I),
- a detection path (20), configured to detect the pulse portions (RI) received after retroreflection or backscattering on the target (T), and to produce heterodyne detection signals which correspond to the pulses (I) of the series, and
- a spectral analysis module (30), adapted to carry out a spectral analysis of the heterodyne detection signals, so that the value of the frequency shift (ν_{Doppler}) results from heterodyne detection contributions which correspond to the pulses (I) of the series,
the system (100) being **characterized in that** it is adapted to provide an estimate of an air flow speed component when the system is pointed to emit the radiation pulses (I) towards a portion of atmosphere which contains suspended particles forming the target (T), the particles being backscatterers for said radiation,
and **in that**:
- the transmission path (10) is further configured so that two pulses (I) successively emitted towards the target (T) are spectrally disjoint and associated with respective central wavelength values which are different, and
- the system (100) is adapted so that the value of the Doppler effect frequency shift (ν_{Doppler}) which is determined by the spectral analysis module (30) results from a combination of several heterodyne detection contributions which respectively correspond to the spectrally disjoint pulses and for which the central wavelength values are different, by determining an elementary value for the Doppler effect frequency shift based on each heterodyne detection spectral contribution, independently of the other heterodyne detection spectral contributions, and then averaging the elementary values to calculate a final value of the Doppler effect frequency shift.

2. The pulsed LIDAR system (100) according to claim 1, wherein the transmission path (10) is further configured so that any two successively emitted pulses (I) are spectrally disjoint by at least 10 MHz, preferably at least 20 MHz, and at most 2000 MHz.

3. The pulsed LIDAR system (100) according to any one of the preceding claims, wherein the transmission path (10) is further configured so that the series of pulses (I) repeats a constant sequence of central wavelength values for the pulses.

4. The pulsed LIDAR system (100) according to claim 3, wherein the transmission path (10) is further configured so that differences between the central wavelength values which relate to pairs of successively emitted pulses (I), within the repeated sequence, are constant.

5. The pulsed LIDAR system (100) according to any one of the preceding claims, wherein the transmission path (10) is further configured so that a number of different central wavelength values for the pulses (I) in the series is between 2 and 16 inclusive.

6. The pulsed LIDAR system (100) according to any one of the preceding claims, wherein the transmission path (10) is further configured so that durations between successively emitted pulses (I) vary over the course of the series of pulses.

7. The LIDAR system (100) according to any one of the preceding claims, wherein the transmission path (10) comprises:
- a laser emission source (11), adapted to produce an initial laser radiation (R₀);
- at least one modulator (17), arranged to modify the initial laser radiation (R₀) in accordance with a modulation signal applied to at least one control input of said modulator; and
- a controller (18), connected so as to apply the modulation signal to said at least one control input,
said modulation signal being such that the initial laser radiation (R₀) is transformed by the modulator (17) into the series of pulses (I) in which two successive pulses are spectrally disjoint and have central wavelength values which are different,
and a reference input of the detection path (20), which is used for heterodyne detection, is connected to a secondary output (16) of the transmission path (10) which is located between the laser emission source (11) and the modulator (17).

8. The LIDAR system (100) according to claim 7, wherein the modulator (17) is a phase modulator,
and the modulation signal is a phase modulation signal composed of temporally disjoint sequences (S) of linear phase-shift ramps, the linear phase-shift ramps being identical and successive within each sequence and having different slopes between different sequences, and the sequences of linear phase-shift ramps corresponding one-to-one to the pulses (I) emitted by the LIDAR system (100).

9. The LIDAR system (100) according to claim 7, wherein the modulator (17) comprises a recombination Mach-Zehnder interferometer (170), and two secondary Mach-Zehnder interferometers (171, 172) which are arranged one each on two separate optical propagation paths of the recombination Mach-Zehnder interferometer, and comprises means for applying the following phase shifts:
- a first phase shift, which is applied between two separate optical propagation paths of a first of the two secondary Mach-Zehnder interferometers (171, 172), and which is equal to a sum of pi and a first phase shift component which varies sinusoidally as a function of time;
- a second phase shift, which is applied between two separate optical propagation paths of a second of the two secondary Mach-Zehnder interferometers (171, 172), and which is equal to a sum of pi and a second phase shift component which varies sinusoidally as a function of time, said first and second phase shift components which vary sinusoidally as a function of time having a common frequency and being in phase quadrature with each other; and
- a third phase shift, which is applied between the two optical propagation paths of the recombination Mach-Zehnder interferometer (170), and which is equal to plus or minus half of pi,
the common frequency of the first and second phase shift components which vary sinusoidally as a function of time determining a difference between the central wavelength value of the emitted pulse (I) and a wavelength value of the initial laser radiation (R₀) which is produced by the laser emission source (11).

10. The LIDAR system (100) according to any one of the preceding claims, wherein the transmission path (10) and/or the detection path (20) is implemented by optical fiber technology, to interconnect components of said transmission path and/or detection path.
